# EUROPÄISCHE PATENTSCHRIFT

(11) **EP 2 497 568 B1**
(45) Veröffentlichungstag und Bekanntmachung des Hinweises auf die Patenterteilung: **22.09.2021**
(21) Anmeldenummer: 12401014.1
(22) Anmeldetag: 30.01.2012
(51) Int. Cl.: B01J 4/02, C02F 1/68

(54) **Vorrichtung zum Impfen von durch Rohre geleitetem Fluid**
Device for injecting fluid guided through tubes
Dispositif d'inoculation de fluide guidé à travers des tuyaux

(30) Priorität: 09.03.2011 DE 102011001166
(43) Veröffentlichungstag der Anmeldung: 12.09.2012
(73) Patentinhaber: Rothenberger AG, 65779 Kelkheim (DE)
(72) Erfinder: Bode, Olaf, 65520 Bad Camberg (DE)

(56) Entgegenhaltungen:
- DE-A1- 3 400 263
- DE-A1- 3 715 010
- DE-C1- 19 639 666
- None

## Beschreibung

Die Erfindung betrifft eine Vorrichtung zum Impfen von durch Rohre geleitetem Fluid mit einem Behälter zur Aufnahme eines Impfmittels, wobei der Behälter einen Auslass für das Impfmittel aufweist, über welchen das Impfmittel in wenigstens eines der Rohre zuführbar ist.

### Stand der Technik

Eine derartige Vorrichtung zum Impfen von durch Rohre geleitetem Fluid ist aus der DE 1 242 575 A1 bekannt. Die Vorrichtung dient zum Impfen von Wasser, welches die Rohrleitungen beispielsweise einer Wasserversorgungsanlage durchströmt. Die Vorrichtung hat einen Vorratsbehälter in Art eines flexiblen Beutels, welcher mit Impfmittel befüllt ist. Um das Impfmittel aus dem Vorratsbehälter heraus zu fördern, nutzt die Vorrichtung die Energie der Strömung des Wassers aus. Dazu ist in den Querschnitt der von dem Wasser durchströmten Rohrleitung eine Staublende integriert. Die Staublende verjüngt jedoch den Querschnitt des Rohres. Dadurch sind Ablagerungen im Bereich der Staubblende begünstig, welche den Fördermechanismus für das Impfmittel stören und damit die Funktionsweise der Vorrichtung beeinträchtigen.

Weitere Vorrichtungen für vergleichbare Zwecke oder mit ähnlichen Funktionen offenbaren die amtlichen Druckschriften DE 196 39 666 C1, DE 34 00 263 A sowie DE 37 15 01C A1.

### Aufgabenstellung

Der Erfindung liegt daher die Aufgabe zugrunde, eine Vorrichtung zum Impfen von durch Rohre geleitetem Fluid mit den eingangs genannten Merkmalen bereit zu stellen, durch welche ein Impfen des Fluids betriebssicher und in technisch einfacher Weise durchgeführt wird.

### Erfindung und vorteilhafte Wirkungen

Diese Aufgabe wird mit den Merkmalen des Anspruches 1 oder des Anspruchs 2 gelöst.

Vorteilhafte Ausgestaltungen ergeben sich aus den Unteransprüchen, der nachfolgenden Beschreibung und den Figuren.

Eine erste Vorrichtung zum Impfen von durch Rohre geleitetem Fluid weist einen Behälter zur Aufnahme eines Impfmittels auf. Der Behälter hat einen Auslass für das Impfmittel, über welchen das Impfmittel in wenigstens eines der Rohre zuführbar ist. Der Behälter weist einen Einlass auf, welcher zum Zuführen von Druckluft in den mit dem Impfmittel befüllbaren Innenraum des Behälters dient.

Durch diese Maßnahme ist ein das Impfmittel fördernder Fördermechanismus in technisch einfacher Weise realisiert. Das Impfmittel wird aus dem Behälter herausgefördert, indem der Behälter mit Druckluft beaufschlagt wird und dadurch das Impfmittel über den Auslass aus dem Behälter herausgedrückt wird.

Der Behälter ist bevorzugt dazu ausgebildet, ein Impfmittel aufzunehmen, welches zur Entkalkung und/oder Desinfektion des Fluids bzw. der Rohre dient. Der Behälter ist ferner zur Aufnahme eines Impfmittels mit Inhibitoren ausgebildet. Die Inhibitoren können gegen Kalkablagerungen, Korrosion, Befall von Bakterien und Pilzen und/oder Frost wirken. Das Impfmittel kann als Desinfektionsmittel, beispielsweise Wasserstoffperoxid, Chlorbleichlauge und/oder Chlordioxid enthalten.

Die erste Vorrichtung ist dazu geeignet, den mit derartigem Impfmittel gefüllten Behälter zu nutzen, um damit das durch die Rohre geleitete Fluid zu impfen. Ein solches durch die Rohre strömendes Fluid kann Wasser, insbesondere Leitungswasser sein. Grundsätzlich kann das Fluid jede Art von flüssigem Medium sein. Das Fluid kann auch ein Gas oder Dampf sein. Denkbar ist als Fluid ferner ein Flüssigkeit-GasGemisch.

Eine zweite Vorrichtung zum Impfen von durch Rohre geleitetem Fluid umfasst zum Fördern des Impfmittels eine Strahlpumpe, dessen Saugeingang mit dem Auslass des Behälters zusammenwirkt und dessen Ausgang mit wenigstens einem der Rohre strömungsverbindbar ist.

Im Zuge der Erfindung ist unter der Strahlpumpe eine Pumpe zu verstehen, in der die Pumpwirkung durch einen Fluidstrahl als Treibmedium erzeugt wird, wobei der Fluidstrahl durch Impulsaustausch ein anderes Medium, nämlich das Saugmedium, ansaugt, beschleunigt und fördert. Dadurch ist ein Fördern des Impfmittels mit geringstem technischen Aufwand und damit geringen Kosten möglich. Auch ist dadurch eine besonders wartungsarme Vorrichtung zum Impfen von durch Rohre geleitetem Fluid, nachfolgend auch als Impfvorrichtung bezeichnet, realisiert, da die Strahlpumpe selbst aufgrund ihrer fehlenden bewegten Teile besonders wartungsarm ist. Darüber hinaus ist mittels der Strahlpumpe ein Fördern des Impfmittels ohne elektrische Bauteile und damit unabhängig von etwaigen elektrischen Verbrauchern möglich, so dass die Impfvorrichtung an Orten eingesetzt werden kann, bei welchen ein Stromanschluss fehlt.

Nach einer Ausgestaltung ist die Strahlpumpe mit ihrem Treibmitteleingang mit wenigstens einem der Rohre strömungsverbindbar. Dadurch dient als Treibmedium für die Strahlpumpe die Strömung des durch die Rohre hindurchströmenden Fluids. Das Fördern des Impfmittels ist dadurch in besonders einfacher Weise und mit besonders geringem Aufwand möglich, da zusätzliche Einrichtungen zum Erzeugen eines Fluidstrahls als Treibmedium nicht erforderlich sind.

Die Strömungsverbindung von Strahlpumpe und dem einen Rohr kann durch einen an dem Rohr anbringbaren Ausgang realisiert sein, welcher mittels einer Leitung mit dem Treibmitteleingang der Strahlpumpe verbunden ist. Um die Strömung des durch die Rohre fließenden Fluids zum Fördern des Stoffmittels zu nutzen, bleibt der Durchmesser der von dem Fluid durchströmten Rohrleitungen unverändert. Insofern ergibt sich daraus ein Vorteil gegenüber der bisher bekannten Impfvorrichtung, welcher zur Nutzung der durch das Rohr geleiteten Strömung eine Staublende in dem durchströmten Rohrquerschnitt vorsieht und damit eine erhebliche Beeinflussung der Strömung vornimmt.

Es bietet sich an, dass der Behälter druckfest ausgebildet ist. Sofern die Impfvorrichtung zum Fördern des Impfmittels Druckluft nutzt, ist dadurch sichergestellt, dass durch die Druckluft sich im Innenraum des Behälters ein Überdruck aufbauen kann, welcher auf das Impfmittel wirkt und das Impfmittel über den Ausgang nach außen drückt bzw. fördert.

Sofern zum Fördern des Impfmittels eine Strahlpumpe vorgesehen ist, kann der Behälter aus einem flexiblen Material, insbesondere elastischen Material, bestehen. Bevorzugt sollte der Behälter formstabil sein, um eine einfache Handhabung, beispielsweise beim Einfüllen von Impfmittel in den Behälter, zu gewährleisten.

Bevorzugt sollte der Behälter ferner wenigstens ein Belüftungsventil aufweisen, beispielsweise um zu vermeiden, dass die Strahlpumpe gegen ein Vakuum arbeitet.

Bevorzugt ist der druckfeste Behälter aus Kunststoff, Glas oder Metall gebildet.

Ferner kann der Behälter ein Deckelteil aufweisen, welches eine Befüllöffnung für das Impfmittel lösbar verschließt. Dadurch ist ein Befüllen des Behälters mit Impfmittel in einfacher Weise möglich, indem der Behälter von dem Deckelteil gelöst wird und damit die Befüllöffnung freigelegt ist.

Nach einer weiteren Ausgestaltung ist es vorgesehen, dass der Einlass und/oder der Auslass des Behälters an einem Deckelteil angeordnet sind, mit welchem der Behälter lösbar verbunden ist. Dadurch ist ein Austausch des Behälters, beispielsweise ein Austausch eines leeren Behälters gegen einen vollen Behälter, oder eines mit dem einen Impfmittel befüllten Behälter gegen einen mit einem anderen Impfmittel befüllten Behälter möglich, ohne dazu aufwendig Einlass bzw. Auslass von dem Behälter lösen zu müssen. Es ist lediglich der Behälter von dem Deckelteil zu lösen. Ein Austausch des Behälters ist dadurch begünstigt.

Das Deckelteil mit dem Einlass und/oder dem Auslass kann zugleich das Deckelteil sein, welches die Befüllöffnung des Behälters oder eine Befüllöffnung des Behälters lösbar verschließt.

Es bietet sich an, dass der Behälter und das Deckelteil zueinander einen Drehverschluss bilden, so dass der Behälter in das Deckelteil einschraubbar ist.

Auch ist es denkbar, dass das Deckelteil und der Behälter einen Bajonettverschluss bilden.

Vorzugsweise sollten Deckelteil und Behälter gegeneinander dichtend abschließen. Hierzu kann ein Dichtelement, beispielsweise in Art eines Dichtringes, vorgesehen sein, welcher zwischen Deckelteil und dem Behälter angeordnet ist und bei einem Zusammenfügen von Deckelteil und Behälter eine dichte Verbindung herstellt.

Nach dem Anspruch 1 und dem Anspruch 2 zeichnet sich eine anspruchsgemäße Vorrichtung zum Impfen von durch Rohre geleitetem Fluid unter anderem dadurch aus, dass wenigstens eine Kapillare vorgesehen ist, durch welche das Impfmittel beim Impfen hindurchgeleitet wird, insbesondere hindurchströmt.

Im Zuge der Erfindung ist unter der Kapillare ein länglicher Kanal oder Durchgang zu verstehen, welcher im Querschnitt relativ klein dimensioniert ist, wodurch die Kapillare beim Durchleiten des Impfmittels als Drossel wirkt.

Durch die Drosselwirkung der Kapillare ist auf technisch einfache Weise und besonders kostengünstig eine Dosierung des Impfmittels möglich. Aufgrund der erheblichen Drosselwirkung der Kapillare kann das Impfmittel in der Weise dem durch die Rohre strömenden Fluid zudosiert werden, dass das Impfmittel relativ langsam und gleichmäßig dem zu impfenden Fluid zuströmt.

Durch die Dimensionierung der Kapillare hinsichtlich ihrer Länge und der Querschnittsabmessung kann die pro Zeiteinheit dem Fluid zugeführte Menge an Impfmittel individuell und flexibel auf eine gewünschte Dosiermenge und einen gewünschten Massenstrom eingestellt werden.

Es bietet sich an, dass die Kapillare als Röhrchen ausgebildet ist.

Es bietet sich ferner an, dass die Kapillare als Röhrchen mit einer Länge von etwa 50 mm bis etwa 400 mm, insbesondere mit einer Länge von etwa 150 mm bis etwa 200 mm, vorzugsweise mit einer Länge von etwa 175 mm ist. Vorzugsweise sollte der Innendurchmesser des Röhrchens etwa 0,1 mm bis etwa 3 mm, insbesondere etwa 0,3 mm bis etwa 1,0 mm, vorzugsweise etwa 0,7 mm betragen.

Die Kapillare ist zumindest teilweise innerhalb des Behälters angeordnet. Dadurch ist die Kapillare geschützt und dauerhaft eine Kapillarwirkung durch die Kapillare gewährleistet.

Bevorzugt sollte die Kapillare sich bis in oder an den Bereich des Bodens des Behälters erstrecken. Dadurch ist sichergestellt, dass auch bei geringem Füllstand an Impfmittel in dem Behälter das Impfmittel in die Kapillare gelangt.

Es bietet sich ferner an, dass die Kapillare an dem Auslass des Behälters angebunden ist. Dadurch liegt die Kapillare in einer definierten Lage bezüglich des Auslasses vor. Der Auslass dient insofern als Anbindungsstelle für die Kapillare.

Bevorzugt sollte die Kapillare an dem Auslass lösbar angeordnet sein, so dass ein Austausch einer beschädigten Kapillare gegen eine neue Kapillare oder einer Kapillare mit anderen Abmessungen in einfacher Weise möglich ist.

Bevorzugt ist die Kapillare ein Kunststoffteil, insbesondere ein Spritzgussteil. Hierdurch kann auf in Massen hergestellte besonders kostengünstige Bauteile zurückgegriffen werden.

Ein anspruchsgemäßes Kombigerät mit einer Impfvorrichtung der vorstehend beschriebenen Art und einer Vorrichtung zum Spülen von Rohrleitungen weist eine Doppelfunktion auf. Zum einen ist mittels des Kombigerätes das durch die Rohre geleitete Fluid mittels eines Impfmittels, wie beispielsweise eines Entkalkungsmittels, Desinfektionsmittels und/oder eines sonstigen Impfmittels mit Inhibitorwirkung möglich. Zum anderen ist es möglich, die von dem Fluid durchströmten Rohrleitungen bzw. Rohre zu spülen und damit von Ablagerungen oder Verstopfungen oder dergleichen zu befreien.

Das Kombigerät ist besonders für den Einsatz an Rohrleitungen von Wasserversorgungssystemen, insbesondere häuslichen Rohrleitungen der Wasserversorgung, geeignet.

Das Kombigerät weist eine gemeinsame Einrichtung zum Erzeugen von Druckluft und/oder eine gemeinsame Einrichtung zum Speichern von Druckluft auf, dessen Druckluft wahlweise zum Spülen der Rohre oder zum Fördern des Impfmittels aus dem Behälter dient. Dadurch wird auf eine einzige Einrichtung im Hinblick auf die Drucklufterzeugung bzw. die Speicherung der Druckluft zurückgegriffen, welche für beide Vorrichtungen des Kombigerätes genutzt wird.

Ferner weist das Kombigerät gemäß Anspruch 1 ein Ventil auf, dessen Eingang mit Druckluft beaufschlagbar ist und über dessen ersten Ausgang der mit Impfmittel befüllbare oder befüllte Behälter und über dessen zweiten Ausgang die zu spülende Rohrleitung mit Druckluft versorgt wird. Hierdurch ist in besonders einfacher Weise die Vorrichtung zum Impfen von durch Rohre geleitetem Fluid und/oder die Vorrichtung zum Spülen von Rohrleitungen mit Druckluft beaufschlagbar.

Das Ventil kann händisch betätigbar sein. Auch ist es denkbar, dass das Ventil elektrisch steuerbar und/oder elektrisch regelbar ist.

Es bietet sich an, dass der erste Ausgang, der zweite Ausgang und gegebenenfalls eine Neutralstellung des Ventils wahlweise in eine Offenstellung bringbar sind.

Durch die offenbarten Maßnahmen kann ein durch Rohre geleitetes Fluid mittels eines Impfmittels in technisch einfacher und kostengünstiger Weise geimpft werden, ohne dass dazu eine zusätzliche Elektronik erforderlich ist. Zum Fördern des Impfmittels wird auf das Prinzip der Strahlpumpe zurückgegriffen oder Druckluft eingesetzt.

### Ausführungsbeispiele

Weitere Ziele, Vorteile, Merkmale und Anwendungsmöglichkeiten der vorliegenden Erfindung ergeben sich aus der nachfolgenden Beschreibung mehrerer Ausführungsbeispiele anhand der Zeichnung.

Es zeigen:
- Fig. 1: eine mögliche Ausführungsform nach Anspruch 1 einer Vorrichtung zum Impfen von durch Rohre geleitetem Fluid als Bestandteil eines Kombigerätes mit einer Vorrichtung zum Spülen von Rohrleitungen in einer Seitenansicht,
- Fig. 2: eine Ausführungsform nach Anspruch 2 einer Vorrichtung zum Impfen von durch Rohre geleitetem Fluid in einer schematisierten Darstellung und
- Fig. 3: eine weitere Ausführungsform nach Anspruch 2 einer Vorrichtung zum Impfen von durch Rohre geleitetem Fluid in einer schematisierten Darstellung.

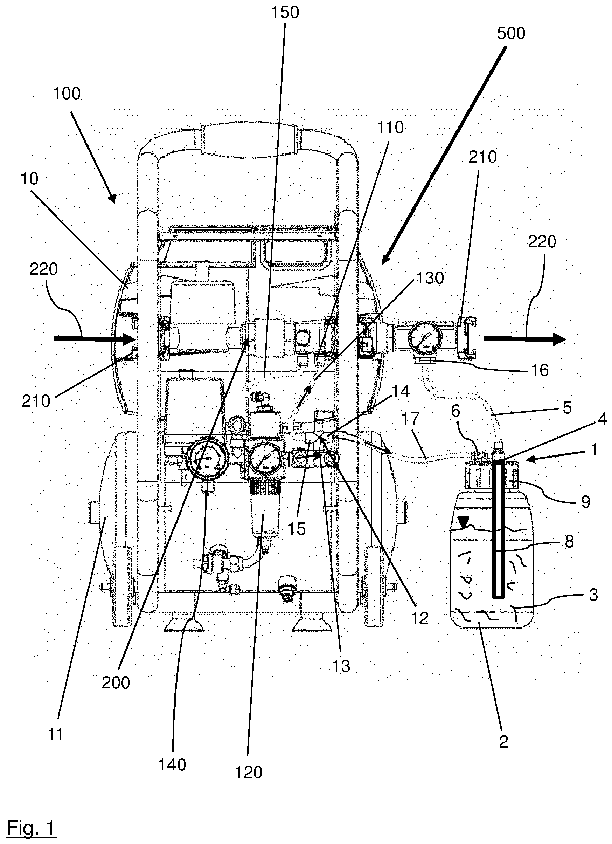

Figur 1 zeigt eine mögliche Ausführungsform eines Kombigerätes 500, welches eine mögliche Ausführungsform einer Vorrichtung 1 zum Impfen von durch Rohre geleitetem Fluid und eine Vorrichtung 100 zum Spülen von Rohrleitungen umfasst.

Die Vorrichtung 1 zum Impfen von durch Rohre geleitetem Fluid, nachfolgend Impfvorrichtung genannt, und die Vorrichtung 100 zum Spülen von Rohrleitungen, nachfolgend Spülvorrichtung genannt, wirken auf einen gemeinsamen Rohrabschnitt 200. Der Rohrabschnitt 200 weist eingangsseitig und ausgangsseitig jeweils eine Anbindungsstelle 210 auf, um daran beispielsweise über flexible Leitungsabschnitte den Rohrabschnitt 200 in ein Rohrsystem, beispielsweise eines Wasserleitungssystems, anzubinden. Wenn der Rohrabschnitt 200 an das Rohrleitungssystem angekoppelt ist, wird der Rohrabschnitt 200 von dem durch die Rohrleitungen hindurchströmenden Fluid beispielsweise in Richtung gemäß der Pfeile 220 durchströmt.

Der Rohrabschnitt 200 weist wenigstens eine Impfstelle 16 auf, welche durch einen Einlass gebildet ist. An die Impfstelle 16 bzw. den Einlass ist eine Zuleitung 5 der Impfvorrichtung 1 anbindbar bzw. angebunden. Der Abschnitt des Rohrabschnittes 200, an dem die Impfstelle 16 vorgesehen ist, kann mit dem Rohrabschnitt 200 fest verbunden sein. Denkbar ist es ferner, dass der Abschnitt mit der Impfstelle 16 von dem Rohrabschnitt 200 lösbar verbunden ist.

Die Impfvorrichtung 1 weist einen Behälter 2 auf, in welchem sich Impfmittel 3 befindet. Der Behälter 2 ist druckfest und besteht vorzugsweise aus Kunststoff. Der Behälter 2 ist nach oben hin offen und von einem Deckelteil 9, beispielsweise mittels eines Schraubverschlusses, verschlossen. An dem Deckelteil 9 ist ein Auslass 4 angeordnet, welcher nach außen hin mit der Zuleitung 5 verbunden ist.

Der Auslass 4 ist ferner mit einer Kapillare 8 verbunden, insbesondere lösbar verbunden. Die Kapillare 8 erstreckt sich in den Innenraum 7 des Behälters 2. Vorzugsweise weist die Kapillare 8 eine solche Länge auf, dass die Kapillare 8 bei montiertem Deckelteil 9 an dem Behälter 2 sich bis in den Bereich des Bodens des Behälters erstreckt.

Die Kapillare 8 ist bevorzugt als Röhrchen mit einem Innendurchmesser von etwa 0,3 mm bis etwa 1,0 mm ausgebildet.

An dem Deckelteil 6 ist ein Einlass 6 angeordnet, über welchen der Behälter 2 mit Druckluft beaufschlagbar ist. Bei einer Beaufschlagung des Behälters 2 mit Druckluft wird im Innenraum 7 des Behälters 2 ein Überdruck erzeugt, durch welchen das Impfmittel 3 in die Kapillare 8 gedrückt wird und über die Leitung 5 und die Impfstelle 16 in den Rohrabschnitt 200 gelangt.

Die Druckluft für die Impfvorrichtung 1 wird von einer Drucklufterzeugungseinrichtung 10 und einem Druckluftspeicher 11 zur Verfügung gestellt, welche vorzugsweise beide integrale Bestandteile der Spülvorrichtung 100 sind. Die Druckluft wird von dem Druckluftspeicher 11 über einen voreingestellten Filterdruckregler 120 dem Eingang 13 eines Ventiles 12 zugeführt und gelangt über dessen ersten Ausgang 14 und die Leitung 17 zu dem Einlass 6 des Behälters 2. Die Druckluft gelangt ferner über den zweiten Ausgang 15 des Ventiles 12 über eine Leitung 130 an eine im Rohrabschnitt 20C vorgesehene Einspeisestelle 110 für die Druckluft.

Vorzugsweise ist das Ventil 12 handbetätigbar, so dass durch Betätigen des Ventiles 12 die Druckluft entweder über den ersten Ausgang 14 an die Impfvorrichtung 1 oder über den zweiten Ausgang 15 der Einspeisestelle 110 zum Spülen der Rohrleitung zugeführt wird.

Weiterhin ist ein Manometer 140 vorgesehen, welches vorzugsweise in Strömungsrichtung der Druckluft gesehen, dem Filterdruckregler 120 vorgeschaltet ist und zur momentanen Anzeige des Überdrucks der Druckluft vor dem Filterdruckregler 120 dient. Der Filterdruckregler 120 ist mit dem Rohrabschnitt 220 über eine Leitung 150 verbunden, um den Ausgangsdruck des Filterdruckreglers 120 in Abhängigkeit von dem Druck des Fluids in dem Rohrabschnitt 200 einstellen zu können. Vorzugsweise ist der Ausgangsdruck der Druckluft etwa 1 bar höher als der Druck des Fluids in dem Rohrabschnitt 200 eingestellt.

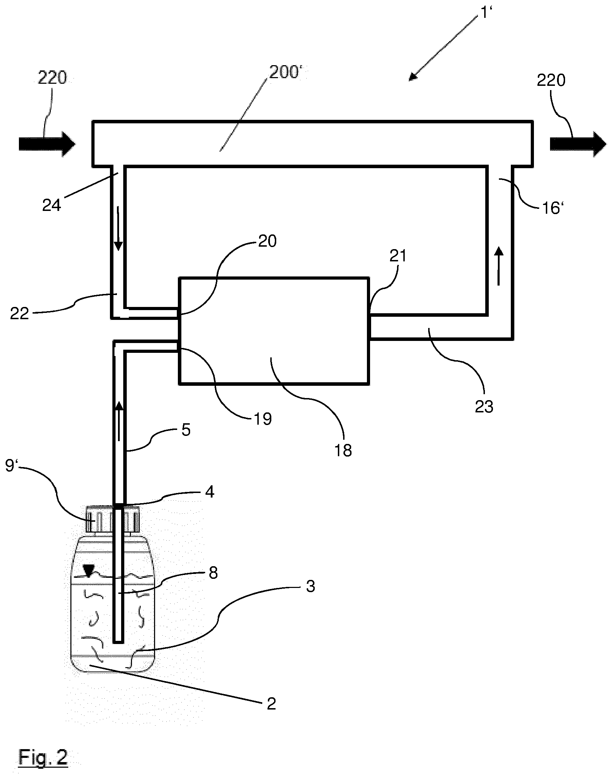

Figur 2 zeigt eine mögliche Ausführungsform nach Anspruch 2 einer Vorrichtung 1' zum Impfen von durch Rohre geleitetem Fluid. Die Impfvorrichtung 1' gemäß der Figur 2 unterscheidet sich von der Impfvorrichtung 1 gemäß der Figur 1 unter anderem dadurch, dass zum Fördern des in dem Behälter 2 befindlichen Impfmittels 3 eine Strahlpumpe 18 vorgesehen ist. Die Strahlpumpe 18 weist einen Saugeingang 19 und einen Treibmitteleingang 20 sowie einen Ausgang 21 auf. Der Saugeingang 19 ist über die Leitung 5 mit dem Auslass 4 eines Deckelteiles 9 des Behälters 2 verbunden. Das Deckelteil 9 gemäß der Figur 2 weist gegenüber dem Deckelteil 9 der Figur 1 bevorzugt lediglich den Auslass 4 auf, über welchen die Kapillare 8 sich in den Behälter 2 in das Impfmittel 3 erstreckt.

Die Impfvorrichtung 1' mit ihrer Strahlpumpe 18 wirkt auf einen Rohrabschnitt 200', welcher von einem zu impfenden Fluid durchströmt wird. Das Fluid durchströmt den Rohrabschnitt 200 vorzugsweise in Richtung gemäß dem Pfeil 220. Der Rohrabschnitt 200' weist eine Impfstelle 16' auf, über welche das Impfmittel in den Rohrabschnitt 200 hinzu geführt wird. Ferner weist der Rohrabschnitt 200 eine Entnahmestelle 24 auf, über welcher ein Teilestrom des Fluids abgeführt werden kann.

Bevorzugt nutzt die Strahlpumpe 18 als Treibmittel zum Fördern des Impfmittels 3 das in Richtung gemäß Pfeil 220 durch den Rohrabschnitt 200' durchströmende Fluid, von dem ein Teilstrom über die Entnahmestelle mittels der Leitung 22 abgeführt und dem Treibmitteleingang 20 der Strahlpumpe 18 zugeführt wird. Der Ausgang 21 der Strahlpumpe 18 ist über eine Leitung 23 mit der Impfstelle 16 des Rohrabschnittes 200' verbunden, so dass an der Impfstelle 16 der entnommene Teilstrom des Fluids zusammen mit dem aus dem Behälter 2 heraus geförderten Teilstrom des Impfmittels 3 in den Rohrabschnitt 200' zugeführt wird.

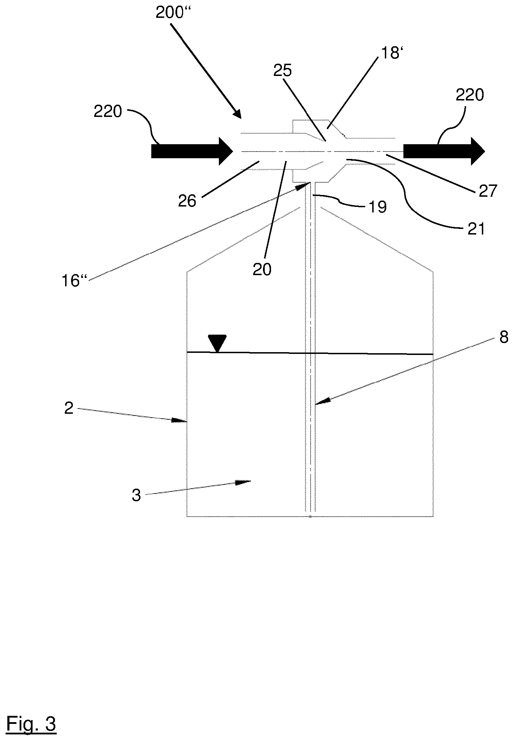

Figur 3 zeigt eine weitere Ausführungsform nach Anspruch 2 einer Vorrichtung 1'' zum Impfen von durch Rohre geleitetem Fluid. Bauteile der Impfvorrichtung 1" gemäß der Figur 3, welche mit den Bauteilen der Impfvorrichtung 1 gemäß der Figur 1 und/oder der Impfvorrichtung 1' gemäß der Figur 2 identisch oder funktionsgleich sind, sind mit gleichen Bezugszeichen versehen; insofern wird auf die Beschreibung zu der Impfvorrichtung 1 gemäß der Figur 1 und der Impfvorrichtung 1' der Figur 2 verwiesen.

Die Impfvorrichtung 1" gemäß der Figur 3 unterscheidet sich von der Impfvorrichtung 1' gemäß der Figur 2 unter anderem dadurch, dass ein von dem Fluid durchströmter Rohrabschnitt 200'' vorgesehen ist, in welchen eine Strahlpumpe 18' bereits integriert ist. Die Strahlpumpe 18' wird bei der Impfvorrichtung 1'' von dem Fluid vollständig durchströmt. Die Strahlpumpe 18' weist einen Düsenbereich 25 auf, welcher von einem im Querschnitt verjüngten Endabschnitt eines Teiles 26 des Rohrabschnittes 200'' gebildet ist. Der Teil 26 des Rohrabschnittes 200'' bildet somit den Treibmitteleingang 20 der Strahlpumpe 18'.

Die Strahlpumpe 18' mündet mit ihrem Ausgang 21 in einen sich an den Teil 26 anschließenden Teil 27 des Rohrabschnittes 200''. Die Impfstelle 16" des Rohrabschnittes 20C ist ferner durch den Saugeingang 19 der Strahlpumpe 18" gebildet.

### Bezugszeichenliste

- 1: Impfvorrichtung
- 1': Impfvorrichtung
- 1": Impfvorrichtung
- 2: Behälter
- 3: Impfmittel
- 4: Auslass
- 5: Zuleitung
- 6: Einlass
- 7: Innenraum
- 8: Kapillare
- 9: Deckelteil
- 9': Deckelteil
- 10: Drucklufterzeugungseinrichtung
- 11: Druckluftspeicher
- 12: Ventil
- 13: Eingang
- 14: 1. Ausgang
- 15: 2. Ausgang
- 16: Impfstelle
- 16': Impfstelle
- 16": Impfstelle
- 17: Leitung
- 18: Strahlpumpe
- 18': Strahlpumpe
- 19: Saugeingang
- 20: Treibmitteleingang
- 21: Ausgang
- 22: Leitung
- 23: Leitung
- 24: Entnahmestelle
- 25: Düsenbereich
- 26: Teil
- 27: Teil

- 100: Spülvorrichtung
- 110: Einspeisestelle
- 120: Filterdruckregler
- 130: Leitung
- 140: Manometer
- 150: Leitung

- 200: Rohrabschnitt
- 200': Rohrabschnitt
- 200'': Rohrabschnitt
- 210: Anbindungsstelle
- 220: Pfeil

- 500: Kombigerät

## Patentansprüche

1. Kombigerät (500) mit einer Vorrichtung (1) zum Impfen von durch Rohre geleitetem Fluid, die einen Behälter (2) zur Aufnahme eines Impfmittels (3) umfasst, und mit einer Vorrichtung (100) zum Spülen von Rohrleitungen, aufweisend eine gemeinsame Einrichtung (10) zum Erzeugen von Druckluft und/oder eine gemeinsame Einrichtung (11) zum Speichern von Druckluft, welche wahlweise zum Spülen der Rohre oder Fördern von des Impfmittels aus dem Behälter dient, wobei der Behälter (2) einen Auslass (4) für das Impfmittel (3) aufweist, über welchen das Impfmittel (3) in wenigstens eines der Rohre (200) zuführbar ist, und einen Einlass (6) aufweist, welcher zum Zuführen von der Druckluft in den mit dem Impfmittel (3) befüllbaren Innenraum (7) des Behälters (2) dient, und ein Ventil (12), dessen Eingang (13) mit der Druckluft beaufschlagbar ist und über dessen ersten Ausgang (14) der mit Impfmittel (3) befüllbare oder befüllte Behälter (2) und über dessen zweiten Ausgang (15) die zu spülende Rohrleitung mit Druckluft versorgt werden können,
**dadurch gekennzeichnet, dass** das Kombigerät (500) zum mobilen Einsatz einen Rohrabschnitt (200) mit eingangsseitig und ausgangseitig eine Anbindungsstelle (210) zum Anbinden des Rohrabschnittes an ein Rohrsystem umfasst,
auf welchen die Vorrichtung zum Impfen und die Vorrichtung zum Spülen gemeinsam wirken, indem der Rohrabschnitt eine Impfstelle (16) aufweist, die mit dem Behälter (6) über eine Zuleitung (5) verbunden ist und eine Einspeisestelle (110) für die Druckluft aufweist, die mit dem zweiten Ausgang (15) des Ventils (12) über eine Leitung (130) verbunden ist, und weiter
**dadurch gekennzeichnet, dass** wenigstens eine Kapillare (8) vorgesehen ist, durch welche das Impfmittel (3) beim Impfen hindurchgeleitet wird und die zumindest teilweise innerhalb des Behälters (2) angeordnet ist.

2. Kombigerät (500) mit einer Vorrichtung (1) zum Impfen von durch Rohre geleitetem Fluid, die einen Behälter (2) zur Aufnahme eines Impfmittels (3) umfasst, und einer Vorrichtung (100) zum Spülen von Rohrleitungen, aufweisend eine Einrichtung (10) zum Erzeugen von Druckluft und/oder eine Einrichtung (11) zum Speichern von Druckluft, welche zum Spülen der Rohrleitungen dient, wobei der Behälter (2) einen Auslass (4) für das Impfmittel (3) aufweist, über welchen das Impfmittel (3) in wenigstens eines der Rohre (200', 200") zuführbar ist,
**dadurch gekennzeichnet, dass** das Kombigerät (500) zum mobilen Einsatz einen Rohrabschnitt (200', 200") mit eingangsseitig und ausgangseitig eine Anbindungsstelle (210) zum Anbinden des Rohrabschnittes an ein Rohrsystem umfasst und zum Fördern des Impfmittels (3) eine Strahlpumpe (18; 18') umfasst, mit einem Saugeingang (19), der mit dem Auslass (4) des Behälters (2) zusammenwirkt, und einem Ausgang (21) zum Zuführen des Impfmittels in den Rohrabschnittes (200', 200''), und
**weiterhin dadurch gekennzeichnet, dass** wenigstens eine Kapillare (8) vorgesehen ist, durch welche das Impfmittel (3) beim Impfen hindurchgeleitet wird und die zumindest teilweise innerhalb des Behälters (2) angeordnet ist.

3. Kombigerät (500) nach Anspruch 1 oder 2, **dadurch gekennzeichnet, dass** die Kapillare (8) an dem Auslass (4) angebunden ist, insbesondere mit dem Auslass (4) lösbar verbunden ist.

4. Kombigerät (500) nach Anspruch 2, **dadurch gekennzeichnet, dass** die Strahlpumpe (18; 18') mit ihrem Treibmitteleingang (20) mit der Rohrleitung strömungsverbindbar ist.

5. Kombigerät (500) nach einem der vorangehenden Ansprüche, **dadurch gekennzeichnet, dass** der Behälter (2) druckfest ausgebildet ist.

6. Kombigerät (500) nach Anspruch 1, **dadurch gekennzeichnet, dass** der erste Ausgang (14), der zweite Ausgang (15) und gegebenenfalls eine Neutralstellung des Ventiis (12) wahlweise in eine Offenstellung bringbar sind.

## Claims

1. Combination unit (500) with an apparatus (1) for injecting, for inoculation, fluid guided through tubes, which comprises a container (2) for accommodating an inoculant (3), and with an apparatus (100) for flushing tube lines, having a common device (10) for generating compressed air and/or a common device (11) for storing compressed air, which selectively serves for flushing the tubes or conveying the inoculant from the container, wherein the container (2) has an outlet (4) for the inoculant (3), via which the inoculant (3) can be fed into at least one of the tubes (200), and has an inlet (6), which serves for feeding of the compressed air into the interior (7), fillable with the inoculant (3), of the container (2), and having a valve (12), the inlet (13) of which can be subjected to the compressed air and via the first outlet (14) of which the container (2) fillable or filled with inoculant (3) can be supplied with compressed air and via the second outlet (15) of which the tube line to be flushed can be supplied with compressed air,
**characterized in that** the combination unit (500), for mobile use, comprises a tube section (200) with an attachment point (210) at the inlet side and at the outlet side for attachment of the tube section to a tube system, on which tube section the apparatus for injecting for inoculation and the apparatus for flushing jointly act **in that** the tube section has an injection point (16) for inoculation, which is connected to the container (6) via a feed line (5), and has a feed point (110) for the compressed air, which is connected to the second outlet (15) of the valve (12) via a line (130), and further
**characterized in that** provision is made of at least one capillary (8) through which the inoculant (3) is guided during injection for inoculation and which is arranged at least partially within the container (2).

2. Combination unit (500) with an apparatus (1) for injecting, for inoculation, fluid guided through tubes, which comprises a container (2) for accommodating an inoculant (3), and with an apparatus (100) for flushing tube lines, having a device (10) for generating compressed air and/or a device (11) for storing compressed air, which serves for flushing the tube lines, wherein the container (2) has an outlet (4) for the inoculant (3), via which the inoculant (3) can be fed into at least one of the tubes (20C', 200"),
**characterized in that** the combination unit (500), for mobile use, comprises a tube section (20C', 200'') with an attachment point (210) at the inlet side and at the outlet side for attachment of the tube section to a tube system, and, for conveyance of the inoculant (3), comprises a jet pump (18; 18') with a suction inlet (19), which interacts with the outlet (4) of the container (2), and with an outlet (21), which serves for feeding of the inoculant into the tube section (200', 200''), and
**further characterized in that** provision is made of at least one capillary (8) through which the inoculant (3) is guided during injection for inoculation and which is arranged at least partially within the container (2).

3. Combination unit (500) according to Claim 1 or 2, **characterized in that** the capillary (8) is attached to the outlet (4), in particular is connected detachably to the outlet (4).

4. Combination unit (500) according to Claim 2, **characterized in that** the jet pump (18; 18') can be connected in terms of flow by way of its injection-fluid inlet (20) to the tube line.

5. Combination unit (500) according to one of the preceding claims, **characterized in that** the container (2) is designed to be pressure-resistant.

6. Combination unit (500) according to Claim 1, **characterized in that** the first outlet (14), the second outlet (15) and, possibly, a neutral position of the valve (2) can be selectively brought into an open position.

## Revendications

1. Appareil combiné (500) muni d'un dispositif (1) pour l'inoculation de fluide acheminé à travers des tuyaux, qui comporte un contenant (2) pour la réception d'un agent d'inoculation (3), et muni d'un dispositif (100) pour le rinçage de canalisations, comprenant un appareil commun (10) pour la génération d'air comprimé et/ou un appareil commun (11) pour le stockage d'air comprimé, qui sert au choix au rinçage des tuyaux ou au transport de l'agent d'inoculation hors du contenant, le contenant (2) comprenant une évacuation (4) pour l'agent d'inoculation (3), par l'intermédiaire de laquelle l'agent d'inoculation (3) peut être amené dans au moins un des tuyaux (200), et comprenant une admission (6), qui sert à amener de l'air comprimé dans l'espace intérieur (7) du contenant (2) pouvant être rempli avec l'agent d'inoculation (3), et une soupape (12), dont l'entrée (13) peut être chargée avec l'air comprimé et par l'intermédiaire de la première sortie (14) de laquelle le contenant (2) pouvant être rempli ou rempli avec l'agent d'inoculation (3) peut être approvisionné en air comprimé et par l'intermédiaire de la deuxième sortie (15) de laquelle la canalisation à rincer peut être approvisionnée en air comprimé, **caractérisé en ce que** l'appareil combiné (500) comporte pour l'utilisation mobile une section de tuyau (200) munie d'un emplacement de raccordement (210) côté entrée et côté sortie pour le raccordement de la section de tuyau à un système de tuyaux, sur lequel le dispositif pour l'inoculation et le dispositif pour le rinçage agissent conjointement, **en ce que** la section de tuyau comprend un emplacement d'inoculation (16), qui est relié avec le contenant (6) par l'intermédiaire d'une conduite d'arrivée (5) et un emplacement d'alimentation (110) pour l'air comprimé, qui est relié avec la deuxième sortie (15) de la soupape (12) par l'intermédiaire d'une conduite (130), et en outre **caractérisé en ce qu'**au moins un capillaire (8) est prévu, à travers lequel l'agent d'inoculation (3) est acheminé lors de l'inoculation et qui est agencé au moins partiellement à l'intérieur du contenant (2).

2. Appareil combiné (500) muni d'un dispositif (1) pour l'inoculation de fluide acheminé à travers des tuyaux, qui comporte un contenant (2) pour la réception d'un agent d'inoculation (3), et muni d'un dispositif (100) pour le rinçage de canalisations, comprenant un appareil (10) pour la génération d'air comprimé et/ou un appareil (11) pour le stockage d'air comprimé, qui sert au rinçage des canalisations, le contenant (2) comprenant une évacuation (4) pour l'agent d'inoculation (3), par l'intermédiaire de laquelle l'agent d'inoculation (3) peut être amené dans au moins un des tuyaux (20C', 20C"),
**caractérisé en ce que** l'appareil combiné (500) comporte pour l'utilisation mobile une section de tuyau (200', 200") munie d'un emplacement de raccordement (210) côté entrée et côté sortie pour le raccordement de la section de tuyau à un système de tuyaux et comporte une pompe à jet (18 ; 18') pour le transport de l'agent d'inoculation (3), munie d'une entrée d'aspiration (19), qui coopère avec l'évacuation (4) du contenant (2), et d'une sortie (21) pour amener l'agent d'inoculation dans la section de tuyau (200', 200''), et
**en outre caractérisé en ce qu'**au moins un capillaire (8) est prévu, à travers lequel l'agent d'inoculation (3) est acheminé lors de l'inoculation et qui est agencé au moins partiellement à l'intérieur du contenant (2).

3. Appareil combiné (500) selon la revendication 1 ou 2, **caractérisé en ce que** le capillaire (8) est raccordé à l'évacuation (4), en particulier est relié de manière détachable avec l'évacuation (4).

4. Appareil combiné (500) selon la revendication 2, **caractérisé en ce que** la pompe à jet (18 ; 18') peut être reliée fluidiquement avec son entrée d'agent propulseur (20) avec la canalisation.

5. Appareil combiné (500) selon l'une quelconque des revendications précédentes, **caractérisé en ce que** le contenant (2) est configuré sous forme résistante à la pression.

6. Appareil combiné (500) selon la revendication 1, **caractérisé en ce que** la première sortie (14), la deuxième sortie (15) et éventuellement une position neutre de la soupape (12) peuvent être mises au choix dans une position ouverte.
